# FASCICULE DE BREVET EUROPEEN

(11) **EP 1 691 533 B1**
(45) Date de publication et mention de la délivrance du brevet: **09.01.2008**
(21) Numéro de dépôt: 05292404.0
(22) Date de dépôt: 14.11.2005
(51) Int. Cl.: H04M 1/23, H04M 1/22, G06F 3/023, H04M 1/725

(54) **Telephone presentant un clavier muni de touches a affichage multiple**
Handgerät mit Tasten mit mehreren Labels
Telephone comprising multi-labelled keys

(30) Priorité: 10.02.2005 FR 0501360
(43) Date de publication de la demande: 16.08.2006
(73) Titulaire: SAGEM S.A., 75015 Paris (FR)
(72) Inventeur: Romao, Fernando, 78360 Montesson (FR)
(74) Mandataire: Gorrée, Jean-Michel

(56) Documents cités:
- EP-A- 0 508 563
- WO-A-20/04054210
- US-A1- 2001 055 384
- US-A1- 2002 140 679

## Description

L'invention concerne un téléphone en particulier téléphone mobile, comprenant un écran et un clavier, ledit clavier comprenant une pluralité de touches à affichage multiple comportant des touches alphanumériques.

Plus particulièrement, l'invention vise à faciliter la frappe d'un message sur un téléphone mobile, tout en procurant une bonne ergonomie pour composer un numéro de téléphone.

Le document WO2004/054210 décrit un téléphone mobile présentant :
- un premier mode dans lequel pour chacune des touches à affichage multiple une sollicitation de la touche génère l'affichage sur l'écran d'un caractère numérique et les caractères numériques se succèdent sur l'écran suivant des premières lignes s'étendant suivant une première direction d'affichage sensiblement parallèle au plan du clavier, et
- un deuxième mode dans lequel la même sollicitation de ladite touche génère l'affichage sur l'écran d'un caractère alphabétique et les caractères alphabétiques se succèdent sur l'écran suivant des deuxièmes lignes s'étendant suivant une deuxième direction d'affichage sensiblement parallèle au plan du clavier, la première et la deuxième directions d'affichage sont sensiblement perpendiculaires entre elles. , pour une même orientation du clavier

Un tel téléphone mobile permet d'intégrer de nombreuses fonctions, notamment la saisie de texte, et de faire du téléphone mobile un véritable terminal multimédia. La saisie du texte s'effectue au moyen d'un clavier de type ordinateur (AZERTY ou QWERTY). La saisie des chiffres est effectuée en partie à l'aide du même clavier que les lettres.

En outre, on peut bénéficier au choix d'un clavier ayant plus de lignes que de colonnes pour taper un texte ou d'un clavier ayant plus de colonnes que de lignes pour composer un numéro de téléphone, tout en conservant un affichage des caractères s'étendant de gauche à droite face à soi.

Toutefois, un tel téléphone est relativement complexe et encombrant. Par conséquent, son coût est relativement élevé et, son transport et sa manipulation peuvent se révéler pas toujours très commode.

Pour pallier ces inconvénients, conformément à l'invention, lesdites touches à affichage multiple sont constituées de différentes zones, la sollicitation des différentes zones de chacune des touches alphanumériques générant :
- dans le premier mode, un même caractère numérique, et
- dans le deuxième mode, l'affichage de caractères alphabétiques différents pour chacune de ces zones.

Ainsi, on compense la différence entre le nombre de chiffres et le nombre de lettres, et on optimise le rapport entre la compacité du téléphone et la surface de frappe offerte pour chaque caractère.

Avantageusement, conformément à l'invention, les touches à affichage multiple sont disposées suivant trois lignes longitudinales s'étendant sensiblement parallèlement à la deuxième direction.

Selon une autre caractéristique conforme à l'invention, les touches à affichage multiple comprennent chacune deux dites zones différentes séparées l'une de l'autre par une ligne s'étendant suivant la première direction.

Ainsi, la compacité du téléphone est sensiblement améliorée sans compliquer notablement le téléphone et la manipulation des touches est très simple et ergonomique.

Selon une caractéristique complémentaire, le téléphone présente les caractéristiques suivantes :
- les touches à affichage alphanumérique sont disposées suivant trois lignes longitudinales s'étendant sensiblement parallèlement à la deuxième direction,
- les lignes longitudinales sont constituées de cinq touches à affichage multiple.

Cette configuration est particulièrement ergonomique et permet une bonne compacité du téléphone.

Selon une autre caractéristique avantageuse conforme à l'invention, les touches présentent une dimension supérieure ou égale à 12 millimètres suivant la deuxième direction.

La dimension de chacune des zones des touches permet une précision et un confort de frappe satisfaisants.

Avantageusement, les zones des touches à affichages multiples sont disposées sensiblement suivant un clavier standard de type AZERTY ou QWERTY, lorsque le téléphone est dans le deuxième mode.

Ainsi, l'utilisateur retrouve une disposition habituelle des caractères sur le clavier.

Selon une autre caractéristique avantageuse, le téléphone comprend en outre une touche unique pour faire passer le téléphone du premier mode au deuxième mode et inversement.

Selon une autre caractéristique avantageuse conforme à l'invention, le téléphone présente les caractéristiques suivantes :
- la majorité au moins des touches à affichage multiple porte :
   - des premiers symboles représentant les caractères s'affichant sur l'écran lorsque les touches sont sollicitées alors que le téléphone est dans le premier mode,
   - des deuxièmes symboles représentant les caractères s'affichant sur l'écran lorsque les touches sont sollicitées alors que le téléphone est dans le deuxième mode,
- des moyens d'éclairage illumine :
   - les premiers symboles et pas les deuxièmes symboles lorsque le téléphone est dans le premier mode, et
   - les deuxièmes symboles et pas les premiers symboles lorsque le téléphone est dans le deuxième mode.

D'autres particularités et avantages de la présente invention apparaîtront dans la description ci-après d'exemples de réalisation non limitatifs, en référence aux dessins annexés dans lesquels :
- la figure 1 est une représentation de dessus d'un téléphone conforme à l'invention dans le premier mode,
- la figure 2 est une représentation conformément à la figure 1 du téléphone illustré à la figure 1, dans le deuxième mode,
- la figure 3 est une vue en coupe selon la ligne repérée III-III à la figure 2.

Les figures illustrent un téléphone, plus précisément un téléphone mobile 1, comprenant essentiellement un volet inférieur 42 et un volet supérieur 44 articulés l'un par rapport à l'autre autour d'une direction transversale 36 par l'intermédiaire d'une charnière. Le volet supérieur 44 porte un écran 2 plat, tandis que le volet inférieur 42 porte un clavier 4 sensiblement plan. Le clavier 4 comprend un pavé principal 40 constitué de 15 touches à affichage multiple 6 formant cinq lignes s'étendant suivant la direction transversale 36 et trois lignes s'étendant suivant une direction longitudinale 34 perpendiculaire à la direction transversale 36. Les directions longitudinale 34 et transversale 36 définissent le plan P du clavier 4.

Le clavier 4 comporte en outre, autour du pavé principal 40, une touche pour décrocher 56, une touche pour raccrocher 58, quatre touches de navigation 50 permettant d'accéder à des menus contextuels, une touche de validation 46, une touche de retour 48, une touche d'espacement 28 et une touche de basculement 54.

Le téléphone 1 comprend deux modes de fonctionnement dont le basculement de l'un à l'autre est commandé par la touche de basculement 54 disposée autour du pavé principal 40. Le pavé principal 40 comprend des touches alphanumériques 14. Des symboles sont portés par les touches à affichage multiple 6 de façon à être lus lorsqu'un utilisateur dispose le téléphone 1 avec la direction longitudinale 34 face à lui. Les symboles 30 portés sur les touches alphanumériques 14 sont de type numérique. Lorsque l'utilisateur appuie sur l'une de ces touches alphanumériques 14, le téléphone 1 enregistre la commande de l'utilisateur et affiche consécutivement sur l'écran les symboles numériques 30 portés sur les touches 14. Dans ce premier mode de fonctionnement, les caractères 8 s'affichent sur l'écran 2 suivant des lignes 12 s'étendant suivant une première direction d'affichage 10 sensiblement parallèle à la direction transversale 36.

Par ailleurs, de manière classique, l'appui sur les touches alphanumériques 14 peut être compris par le téléphone 1 comme la composition non pas d'un chiffre mais d'une lettre 52, en modifiant sa fonction par navigation dans les menus contextuels proposés par le téléphone 1. Plusieurs lettres correspondant à une même touche alphanumérique 14, il est alors nécessaire pour obtenir certaines lettres d'effectuer plusieurs appuis successifs sur la même touche alphanumérique 14.

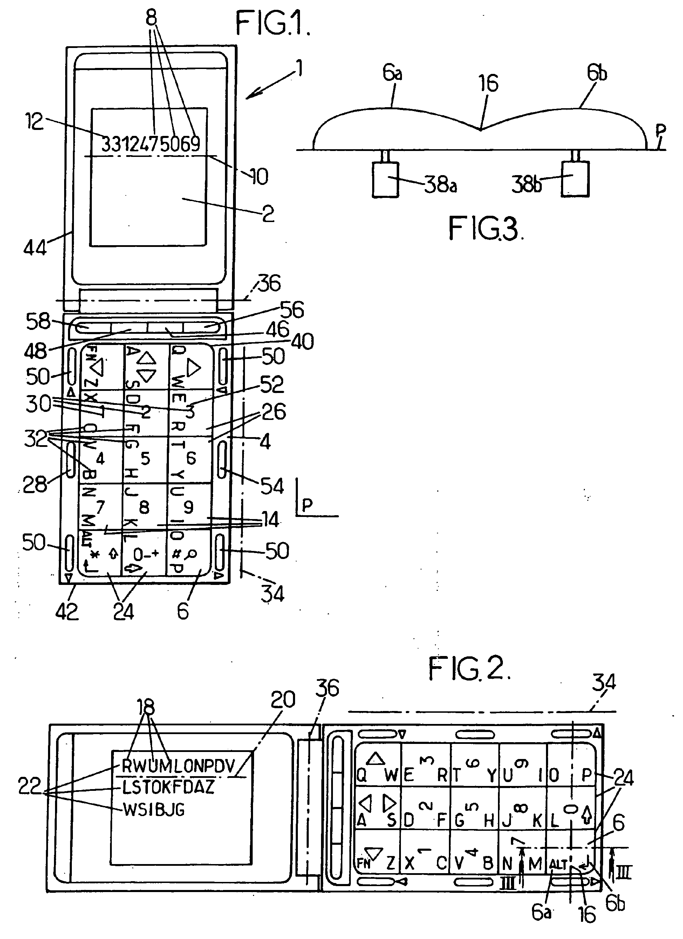

Tel qu'illustré plus précisément à la figure 3, les quinze touches à affichage multiple 6 du pavé principal 40 sont toutes divisées en deux zones 6a, 6b séparées par une ligne de séparation 16 s'étendant parallèlement à la direction transversale 36. Un capteur 38a, 38b est placé sous chacune des zones 6a, 6b de chacune des touches à affichage multiple 6, afin de déterminer quelle zone de la touche a été enfoncée. Dans le premier mode de fonctionnement, les touches à affichage multiple 6 sont considérées comme enfoncée, dès lors que l'un au moins des capteurs 38a, 38b détecte l'enfoncement de la touche. La touche est donc considérée dans son ensemble et aucune distinction n'est par conséquent faite entre les zones 6a et 6b. En revanche, dans le second mode de fonctionnement, une distinction est faite, selon que l'on presse une touche à affichage multiple dans l'une ou l'autre des zones 6a, 6b.

Dans le deuxième mode de fonctionnement, l'affichage sur l'écran 2 est basculé de 90° par rapport au premier mode de fonctionnement, de sorte que, tel qu'illustré à la figure 2, lorsque l'on appuie sur les touches alphanumériques 14, les caractères 18 s'affichant sur l'écran 2 sont des lettres disposées formant des lignes 22 s'étendant suivant une deuxième direction d'affichage 20 sensiblement parallèle à la direction longitudinale 34 du clavier 4.

Des symboles 32, différents pour chacune des zones 6a, 6b, sont portés sur les touches à affichage multiple 6, et en particulier sur les touches alphanumériques 14. Ces symboles sont orientées de façon à être lisibles par un utilisateur ayant disposé le téléphone 1 face à lui de sorte que l'écran 2 et le clavier 4 soient disposés côte à côte, et les lignes longitudinales 24 soient disposées transversalement face à lui.

Les touches à affichage multiple 6 forment alors un clavier relativement standard destiné à la frappe, ici de type QWERTY. Les zones 6a, 6b des cinq touches de la première ligne longitudinale 24 permettant de frapper chacune des dix touches QWERTYUIOP, chaque pression sur une zone de ces touches à affichage multiple générant l'affichage d'une même lettre 18 sur l'écran 2 à chaque pression sur la zone de la touche à affichage multiple 6 correspondante. Les autres lettres de l'alphabet sont disposées dans les deux autres rangées longitudinales 24 de manière classique. Les lettres de l'alphabet sont donc réparties sur vingt-six zones 6a, 6b de touche à affichage multiple.

Par ailleurs, de manière classique, pour augmenter le nombre de caractères utilisables, une zone de touche à affichage multiple 6 présente également une zone permettant lorsqu'on appuie dessus de modifier le caractère s'affichant sur l'écran 2, lors de l'appui subséquent sur l'une des zones 6a, 6b de touches à affichage multiple 6.

Le téléphone 1 comprend en outre des moyens d'illumination par rétro-éclairage des symboles 30 destinés au premier mode de fonctionnement, en particulier les symboles numériques, et des symboles 32 destinés au second mode de fonctionnement, en particulier les lettres. Lorsque l'on passe du premier mode de fonctionnement au deuxième mode de fonctionnement du téléphone en appuyant sur la touche de basculement 54, on fait pivoter l'affichage sur l'écran 2 de 90° et l'éclairage des symboles portés sur les touches à affichage multiple 6 passe des premiers symboles 30 aux deuxièmes symboles 32, afin de n'éclairer dans chacun de ces modes que les symboles correspondant aux caractères que l'appui sur l'une des zones des touches à affichage multiple 6 peut générer dans ce mode de fonctionnement.

En outre, le téléphone dispose d'une interface homme machine basculant automatiquement vers le premier mode de fonctionnement ou le deuxième mode de fonctionnement selon la fonction sélectionnée par l'utilisateur via les menus contextuels. Ainsi, lorsque l'utilisateur demande à passer un appel, le premier mode est automatiquement sélectionné, tandis que le deuxième mode est automatiquement sélectionné lorsque la fonction composition d'un message est sélectionnée.

Chacune des touches à affichage multiple 6 du pavé principal 6 présente une longueur suivant la direction transversale 34 d'au moins 12 mm et de préférence sensiblement égale à 14 mm et une largeur suivant la direction transversale 36 d'au moins 8 mm et de préférence sensiblement égale à 13 mm.

Bien entendu, l'invention n'est pas limitée au mode de réalisation qui n'a été décrit qu'à titre illustratif. Ainsi, pour passer du premier au deuxième mode, on pourrait substituer à la touche de basculement 54 un accéléromètre déterminant la direction de la verticale par rapport au téléphone et permettant donc de distinguer si le clavier 4 et l'écran 2 sont disposés l'un au-dessus de l'autre ou l'un à côté de l'autre.

Au lieu de faire pivoter l'affichage sur l'écran 2 de 90° par pilotage électronique, on pourrait prévoir de faire pivoter mécaniquement l'écran 2 par rapport au clavier 4 autour d'un axe perpendiculaire au plan P du clavier 4.

Bien que cela ne soit pas préféré, on pourrait remplacer la touche 54 de basculement d'un mode à l'autre à une fonction accessible via le menu contextuel, les touches de navigation 50 dans le menu contextuel et la touche de validation 46.

On pourrait également éclairer certains des symboles 32 dans le premier mode de fonctionnement et certains des symboles 30 dans le deuxième mode de fonctionnement. Ceci peut notamment être utile lorsque certaines touches ont la même fonction dans le premier et dans le deuxième mode de fonctionnement.

## Revendications

1. Téléphone (1), en particulier téléphone mobile, comprenant un écran (2) et un clavier (4), ledit clavier comprenant une pluralité de touches à affichage multiple (6) comportant des touches alphanumériques (14), ledit téléphone présentant:
- un premier mode dans lequel pour chacune des touches à affichage multiple (6) une sollicitation de la touche génère l'affichage sur l'écran (2) d'un caractère numérique (8) et les caractères numériques se succèdent sur l'écran suivant des premières lignes (12) s'étendant suivant une première direction d'affichage (10) sensiblement parallèle au plan (P) du clavier, et
- un deuxième mode dans lequel la même sollicitation de ladite touche (6) génère l'affichage sur l'écran d'un caractère alphabétique (18) et les caractères alphabétiques (18) se succèdent sur l'écran suivant des deuxièmes lignes (22) s'étendant suivant une deuxième direction d'affichage (20) sensiblement parallèle au plan (P) du clavier, la première (10) et la deuxième (20) directions d'affichage sont sensiblement perpendiculaires entre elles,
**caractérisé en ce que** lesdites touches à affichage multiple (6) sont constituées de différentes zones (6a, 6b), la sollicitation des différentes zones (6a, 6b) de chacune des touches alphanumériques (6) générant :
- dans le premier mode, un même caractère numérique (8), et
- dans le deuxième mode, l'affichage de caractères alphabétiques (18) différents pour chacune de ces zones (6a, 6b).

2. Téléphone selon la revendication 1, **caractérisé en ce que** les touches à affichage multiple (6) sont disposées suivant trois lignes longitudinales (24) s'étendant sensiblement parallèlement à la deuxième direction (20).

3. Téléphone selon la revendication 1 ou la revendication 2, **caractérisé en ce que** les touches à affichage multiple (6) comprennent chacune deux dites zones (6a, 6b) différentes séparées l'une de l'autre par une ligne de séparation (16) s'étendant suivant la première direction (10).

4. Téléphone selon la revendication 3, **caractérisé en ce que** :
- les touches à affichage alphanumérique (6) sont disposées suivant trois lignes longitudinales (24) s'étendant sensiblement parallèlement à la deuxième direction (10),
- les lignes longitudinales (24) sont constituées de cinq touches (6) à affichage multiple.

5. Téléphone selon la revendication 3 ou la revendication 4, **caractérisé en ce que** les touches (6) présentent une dimension (1) supérieure ou égale à 12 millimètres suivant la deuxième direction (20).

6. Téléphone selon l'une quelconque des revendications précédentes, **caractérisé en ce que** les zones (6a, 6b) des touches à affichage multiple sont disposées sensiblement suivant un clavier standard de type AZERTY ou QWERTY, lorsque le téléphone est dans le deuxième mode.

7. Téléphone selon l'une quelconque des revendications précédentes, **caractérisé en ce qu**'il comprend en outre une touche unique (54) pour faire passer le téléphone du premier mode au deuxième mode et inversement.

8. Téléphone selon l'une quelconque des revendications précédentes, **caractérisé en ce que** :
- la majorité au moins des touches à affichage multiple (6) porte :
• des premiers symboles (30) représentant les caractères (8) s'affichant sur l'écran lorsque les touches à affichage multiple (6) sont sollicitées alors que le téléphone est dans le premier mode,
• des deuxièmes symboles (32) représentant les caractères (18) s'affichant sur l'écran lorsque les touches à affichage multiple (6) sont sollicitées alors que le téléphone est dans le deuxième mode,
- des moyens d'éclairage illumine :
• les premiers symboles (30) et pas les deuxièmes symboles (32) lorsque le téléphone est dans le premier mode, et
• les deuxièmes symboles (32) et pas les premiers symboles (30) lorsque le téléphone est dans le deuxième mode.

## Claims

1. Telephone (1), particularly a mobile telephone, comprising a screen (2) and a keyboard (4), the said keyboard comprising a plurality of keys with multiple displays (6) including alphanumeric keys (14), the said telephone having:
- a first mode in which for each of the keys with multiple displays (6) action on the key generates display on the screen (2) of a numeric character (8) and the numeric characters follow each other on the screen in first lines (12) extending in a first display direction (10) substantially parallel with the plane (P) of the keyboard, and
- a second mode in which the same action on the said key (6) generates display on the screen of an alphabetical character (18) and the alphabetical characters follow each other on the screen in second lines (22) extending in a second display direction (20) substantially parallel with the plane (P) of the keyboard, the first (10) and the second (20) directions are substantially perpendicular to each other,
**characterised by** the fact that the said keys with multiple displays (6) are made up of different zones (6a, 6b), action on the different zones (6a, 6b) of each of the alphanumeric keys (6) generating:
- in the first mode, a same numeric character (8), and
- in the second mode, display of different alphabetical characters (18) for each of these zones (6a, 6b).

2. Telephone as described in claim 1, **characterised by** the fact that the keys with multiple displays (6) are arranged in three longitudinal lines (24) extending substantially parallel with the second direction (20).

3. Telephone as described in claim 1 or claim 2, **characterised by** the fact that the keys with multiple displays (6) each comprise two different said zones (6a, 6b) separated from each other by a separating line (16) extending in the first direction (10).

4. Telephone as described in claim 3, **characterised by** the fact that:
- the keys with alphanumeric displays (6) are arranged in three longitudinal lines (24) extending substantially parallel with the second direction (10),
- the longitudinal lines (24) are formed of five keys (6) with multiple displays.

5. Telephone as described in claim 3 or claim 4, **characterised by** the fact that the keys (6) have a dimension (1) greater than or equal to 12 millimetres in the second direction (20).

6. Telephone as described in any one of the preceding claims, **characterised by** the fact that the zones (6a, 6b) of the keys with multiple displays are substantially arranged in a standard keyboard of AZERTY or QWERTY type, when the telephone is in the second mode.

7. Telephone as described in any one of the preceding claims, **characterised by** the fact that it also comprises a single key (54) for passage of the telephone from the first mode to the second mode and vice versa.

8. Telephone as described in any one of the preceding claims, **characterised by** the fact that:
- at least the majority of the keys with multiple displays (6) bear:
I first symbols (30) representing the characters (8) displayed on the screen when the keys with multiple displays (6) are acted on while the telephone is in the first mode,
I second symbols (32) representing the characters (18) displayed on the screen when the keys with multiple displays (6) are acted on while the telephone is in the second mode,
- lighting means illuminate:
I the first symbols (30) and not the second symbols (32) when the telephone is in the first mode, and
I the second symbols (32) and not the first symbols (30) when the telephone is in the second mode.

## Patentansprüche

1. Telefon (1), insbesondere Mobiltelefon, mit einem Bildschirm (2) und einer Tastatur (4), wobei die Tastatur eine Vielzahl von Tasten mit Mehrfachanzeige (6) umfasst, die alphanumerische Tasten (14) aufweisen, wobei das Telefon umfasst:
- einen ersten Modus, in dem für jede Taste mit Mehrfachanzeige (6) durch Betätigen der Taste die Anzeige eines numerischen Zeichens (8) auf dem Bildschirm (2) erzeugt wird und die numerischen Zeichen auf dem Bildschirm in ersten Reihen (12) aufeinanderfolgen, die in einer zur Ebene (P) der Tastatur im Wesentlichen parallelen ersten Anzeigerichtung (10) verlaufen, und
- einen zweiten Modus, in dem durch Betätigen derselben Taste (6) die Anzeige eines Schriftzeichens (18) auf dem Bildschirm erzeugt wird und die Schriftzeichen (18) auf dem Bildschirm in zweiten Reihen (22) aufeinanderfolgen, die in einer zur Ebene (P) der Tastatur im Wesentlichen parallelen zweiten Anzeigerichtung (20) verlaufen, wobei die erste (10) und die zweite (20) Anzeigerichtung zueinander im Wesentlichen senkrecht sind,
**dadurch gekennzeichnet, dass** die Tasten mit Mehrfachanzeige (6) von unterschiedlichen Bereichen (6a, 6b) gebildet sind, wobei durch Betätigen der unterschiedlichen Bereiche (6a, 6b) einer jeden alphanumerischen Taste (6) erzeugt wird:
- im ersten Modus ein und dasselbe numerische Zeichen (8), und
- im zweiten Modus die Anzeige von Schriftzeichen (18), die für jeden der Bereiche (6a, 6b) unterschiedlich sind.

2. Telefon nach Anspruch 1,
**dadurch gekennzeichnet, dass** die Tasten mit Mehrfachanzeige (6) in drei Längsreihen (24) angeordnet sind, die im Wesentlichen parallel zu der zweiten Richtung (20) verlaufen.

3. Telefon nach Anspruch 1 oder Anspruch 2,
**dadurch gekennzeichnet, dass** die Tasten mit Mehrfachanzeige (6) jeweils zwei sogenannte unterschiedliche Bereiche (6a, 6b) umfassen, die durch eine in der ersten Richtung (10) verlaufende Trennlinie (16) voneinander getrennt sind.

4. Telefon nach Anspruch 3,
**dadurch gekennzeichnet, dass**:
- die Tasten mit alphanumerischer Anzeige (6) in drei Längsreihen (24) angeordnet sind, die im Wesentlichen parallel zu der zweiten Richtung (20) verlaufen,
- die Längsreihen (24) von fünf Tasten (6) mit Mehrfachanzeige gebildet sind.

5. Telefon nach Anspruch 3 oder Anspruch 4,
**dadurch gekennzeichnet, dass** die Tasten (6) eine Größe (1) von größer oder gleich 12 Millimetern in der zweiten Richtung (20) aufweisen.

6. Telefon nach einem der vorhergehenden Ansprüche,
**dadurch gekennzeichnet, dass** die Bereiche (6a, 6b) der Tasten mit Mehrfachanzeige im Wesentlichen gemäß einer Standardtastatur vom Typ AZERTY oder QWERTY angeordnet sind, wenn sich das Telefon im zweiten Modus befindet.

7. Telefon nach einem der vorhergehenden Ansprüche,
**dadurch gekennzeichnet, dass** es ferner eine Einfachtaste (54) umfasst, um das Telefon vom ersten Modus in den zweiten Modus und umgekehrt zu schalten.

8. Telefon nach einem der vorhergehenden Ansprüche,
**dadurch gekennzeichnet, dass**:
- die Tasten mit Mehrfachanzeige (6) wenigstens zum größten Teil:
• mit ersten Symbolen (30) versehen sind, welche die Zeichen (8) wiedergeben, die auf dem Bildschirm angezeigt werden, wenn die Tasten mit Mehrfachanzeige (6) betätigt werden, während sich das Telefon im ersten Modus befindet,
• mit zweiten Symbolen (32) versehen sind, welche die Zeichen (18) wiedergeben, die auf dem Bildschirm angezeigt werden, wenn die Tasten mit Mehrfachanzeige (6) betätigt werden, während sich das Telefon im zweiten Modus befindet
- Beleuchtungsmittel:
• die ersten Symbole (30) und nicht die zweiten Symbole (32) beleuchten, wenn sich das Telefon im ersten Modus befindet, und
• die zweiten Symbole (32) und nicht die ersten Symbole (30) beleuchten, wenn sich das Telefon im zweiten Modus befindet.
